# EUROPEAN PATENT APPLICATION

(11) **EP 4 391 407 A1**
(43) Date of publication of application: **26.06.2024**
(21) Application number: 22858287.0
(22) Date of filing: 29.07.2022
(51) Int. Cl.: H04B 7/06, H04W 16/14, H04W 16/28

(54) **BASE STATION AND COMMUNICATION METHOD**

(30) Priority: 16.08.2021 JP 2021132480
(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN); LU, Yiyi, Beijing 100876 (CN); LI, Yong, Beijing 100876 (CN)
(74) Representative: Hoffmann Eitle
(86) International application number: PCT/JP2022/029367
(87) International publication number: WO 2023/021966

(57) **Abstract**

The base station includes a reception unit configured to perform time division multiplexing of a plurality of reception beams corresponding to a plurality of transmission beams to be applied to transmission in COT (Channel Occupancy Time), and to perform LBT (Listen before talk) in which sensing is performed by applying each of the plurality of reception beams using a round-robin method; and a transmission unit configured to apply, to the transmission in the COT, a transmission beam corresponding to a reception beam, among the plurality of the reception beams, for which a busy state is not detected in the LBT.

## Description

### FIELD OF THE INVENTION

The present invention relates to a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than a conventional release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

### Citation List

### Non-Patent Document

Non-Patent Document 1: 3GPP TS 38.300 V16.6.0 (2021-06)
Non-Patent Document 2: 3GPP TS 38.306 V16.5.0 (2021-06)

### SUMMARY OF THE INVENTION

### TECHNICAL PROBLEM

Directional LBT (Directional Listen before talk) in which beams are applied to sensing in a frequency band that is newly operated and uses a frequency higher than a conventional frequency has been discussed. In a case where directional LBT is performed, it is necessary to determine how to apply beams to sensing.

The present invention has been made in view of the above points, and it is possible to perform directional LBT (Directional Listen before talk), in which a plurality of beams are applied, in a radio communication system.

### SOLUTION TO PROBLEM

According to the disclosed technique, a base station is provided. The base station includes a reception unit configured to perform time division multiplexing of a plurality of reception beams corresponding to a plurality of transmission beams to be applied to transmission in COT (Channel Occupancy Time), and to perform LBT (Listen before talk) in which sensing is performed by applying each of the plurality of reception beams using a round-robin method; and a transmission unit configured to apply, to the transmission in the COT, a transmission beam corresponding to a reception beam, among the plurality of the reception beams, for which a busy state is not detected in the LBT.

### ADVANTAGEOUS EFFECTS OF INVENTION

According to the disclosed technique, it is possible to perform directional LBT (Directional Listen before talk), in which a plurality of beams are applied, in a radio communication system.

### BRIEF DESCRIPTION OF THE DRAWINGS

[Fig. 1] is a drawing illustrating a configuration example of a wireless communication system according to an embodiment of the present invention.
[Fig. 2] is a drawing illustrating an example of a frequency range according to an embodiment of the present invention.
[Fig. 3] is a drawing illustrating LBT.
[Fig. 4] is a drawing illustrating an example of an issue of a hidden terminal.
[Fig. 5] is a drawing illustrating an example (1) of a multi-beam COT.
[Fig. 6] is a drawing illustrating an example (2) of a multi-beam COT.
[Fig. 7] is a drawing illustrating a round-robin CCA.
[Fig. 8] is a drawing illustrating an example (1) of a round-robin CCA when a single back-off counter according to an embodiment of the present invention is applied.
[Fig. 9] is a drawing illustrating an example (2) of a round-robin CCA when a single back-off counter according to an embodiment of the present invention is applied.
[Fig. 10] is a drawing illustrating an example (3) of a round-robin CCA when a single back-off counter according to an embodiment of the present invention is applied.
[Fig. 11] is a drawing illustrating an example (4) of a round-robin CCA when a single back-off counter according to an embodiment of the present invention is applied.
[Fig. 12] is a drawing illustrating an example (5) of a round-robin CCA when a single back-off counter according to an embodiment of the present invention is applied.
[Fig. 13] is a drawing illustrating an example (6) of a round-robin CCA when a single back-off counter according to an embodiment of the present invention is applied.
[Fig. 14] is a drawing illustrating an example (7) of a round-robin CCA when a single back-off counter according to an embodiment of the present invention is applied.
[Fig. 15] is a drawing illustrating an example (8) of a round-robin CCA when a single back-off counter according to an embodiment of the present invention is applied.
[Fig. 16] is a drawing illustrating an example (9) of a round-robin CCA when a single back-off counter according to an embodiment of the present invention is applied.
[Fig. 17] is a drawing illustrating an example (10) of a round-robin CCA when a single back-off counter according to an embodiment of the present invention is applied.
[Fig. 18] is a drawing illustrating an example (11) of a round-robin CCA when a single back-off counter according to an embodiment of the present invention is applied.
[Fig. 19] is a drawing illustrating an example (12) of a round-robin CCA when a single back-off counter according to an embodiment of the present invention is applied.
[Fig. 20] is a drawing illustrating an example (13) of a round-robin CCA when a single back-off counter according to an embodiment of the present invention is applied.
[Fig. 21] is a drawing illustrating an example (14) of a round-robin CCA when a single back-off counter according to an embodiment of the present invention is applied.
[Fig. 22] is a drawing illustrating an example (1) of a round-robin CCA when individual back-off counters according to an embodiment of the present invention are applied.
[Fig. 23] is a drawing illustrating an example (2) of a round-robin CCA when individual back-off counters according to an embodiment of the present invention are applied.
[Fig. 24] is a drawing illustrating an example (3) of a round-robin CCA when individual back-off counters according to an embodiment of the present invention are applied.
[Fig. 25] is a drawing illustrating an example (4) of a round-robin CCA when individual back-off counters according to an embodiment of the present invention are applied.
[Fig. 26] is a drawing illustrating an example (5) of a round-robin CCA when individual back-off counters according to an embodiment of the present invention are applied.
[Fig. 27] is a drawing illustrating an example (6) of a round-robin CCA when individual back-off counters according to an embodiment of the present invention are applied.
[Fig. 28] is a drawing illustrating an example (7) of a round-robin CCA when individual back-off counters according to an embodiment of the present invention are applied.
[Fig. 29] is a drawing illustrating an example (8) of a round-robin CCA when individual back-off counters according to an embodiment of the present invention are applied.
[Fig. 30] is a drawing illustrating an example of a functional structure of a base station 10 according to an embodiment of the present invention.
[Fig. 31] is a drawing illustrating an example of a functional structure of a terminal 20 according to an embodiment of the present invention.
[Fig. 32] is a drawing illustrating an example of a hardware structure of a base station 10 or a terminal 20 according to an embodiment of the present invention.
[Fig. 33] is a drawing illustrating an example of a structure of a vehicle 2001 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

Furthermore, in an embodiment of the present invention, the duplex scheme may be TDD (Time Division Duplex) scheme, FDD (Frequency Division Duplex) scheme, or other schemes (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

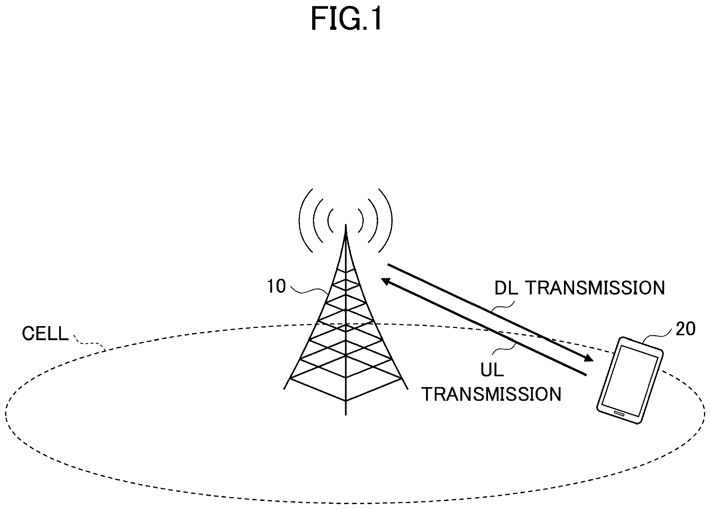

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of subcarriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (Scell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

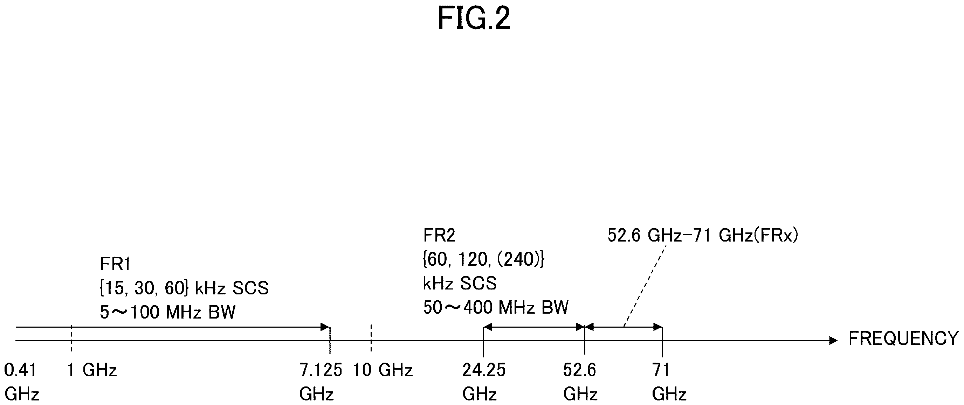

Fig. 2 is a drawing illustrating an example of a frequency range according to an embodiment of the present invention. In the NR specifications of 3GPP (registered trademark) Release 15 and Release 16, for example, an operation in a frequency band of 52.6 GHz or more has been discussed. Note that, as shown in Fig. 2, FR (Frequency range) 1 in which current operation is defined is a frequency band from 410 MHz to 7.125 GHz, SCS (Sub carrier spacing) is 15, 30 or 60 kHz, and bandwidth is from 5 MHz to 100 MHz. FR2 is a frequency band from 24.25 GHz to 52.6 GHz, SCS is 60, 120 or 240 kHz, and bandwidth is from 50 MHz to 400 MHz. For example, the newly operated frequency band may be assumed to be from 52.6 GHz to 71 GHz. Furthermore, a frequency band beyond 71 GHz may be assumed to be supported.

In the above new frequency bands operated in 3GPP release 17, the channel access mechanism is assumed to be beam-based in order to comply with the regulatory requirements that are applied to the unlicensed bands. For example, both LBT (Listen before talk) based access and non-LBT based access may be employed, and in the case of non-LBT based access, no additional sensing mechanism may be employed. In addition, omni-directional LBT, directional LBT, and receiver side assistance may be employed. In addition, enhancements related to the power detection threshold may be performed. Hereafter, the omni-directional LBT may be referred to as omni LBT.

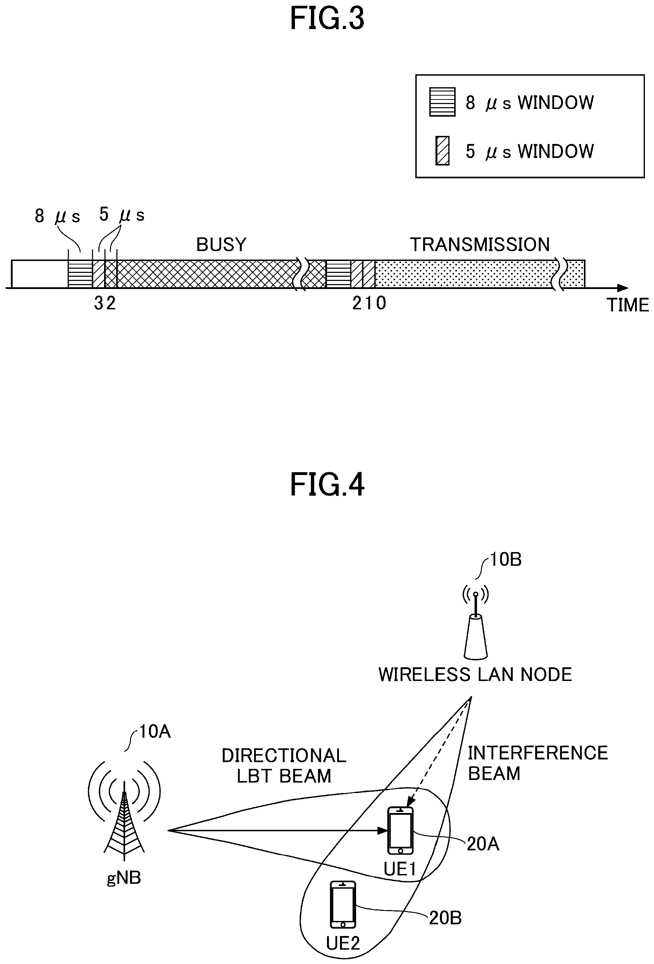

Fig. 3 is a drawing illustrating an example of LBT. For example, in the frequency band from 52.6 GHz to 71 GHz, the CCA (Clear Channel Assessment) procedure may define a period of 8 microseconds + 5 microseconds + random counter as a detection period of a channel, as shown in Fig. 3. Fig. 3 illustrates an example in which the random counter is 3 in the first LBT, 8 + 5 × 3 = 23 microseconds is the channel detection period, and the channel busy is detected in the detection period from 14 microseconds to 18 microseconds.

Further, Fig. 3 illustrates an example in which the second LBT is started from a state in which the random counter is 2 when channel busy is detected in the first LBT, 8 + 5 × 2 = 18 microseconds is the channel detection period, and transmission is started because channel busy is not detected in the detection period.

Note that COT (Channel Occupancy Time) sharing may be supported or need not be supported. In addition, LBT that applies a backoff and a random counter may be performed by other terminals within 1 COT, which may be the same as that at the start of the CCA procedure. In addition, LBT that does not apply a backoff and a random counter may be performed by other terminals within 1 COT, which may be the same as type 2 LBT in NR-U. In addition, LBT need not be performed by other terminals within 1 COT.

Because beam-based transmission and reception are widely used at NR 52.6-71 GHz, the directional LBT that applies beams to sensing may be supported to improve LBT success rate. Hereinafter, the directional LBT may be simply referred to as an LBT.

For example, an LBT corresponding to a COT that applies multiple beams of MU-MIMO (Multi User MIMO) or SDM (Spatial Division Multiplexing) transmission may be supported. For example, the COT that applies multiple beams may be acquired by a single LBT using a wide sensing beam, or may be acquired by an LBT for each beam. It should be noted that the sensing beam is a beam that is applied to sensing in an LBT, and may be referred to as an eCCA (enhanced CCA) beam. In addition, successful LBT or successful eCCA may mean that a busy state is not detected as a result of performing sensing by applying a beam, and failed LBT or failed eCCA may mean that a busy state is detected as a result of performing sensing by applying a beam.

In addition, within a COT to which a time division multiplex beam is applied by beam switching: a single LBT to which a wide beam covering all beams used in the COT is applied may be performed according to an appropriate power detection threshold; independent LBT sensing may be performed for each of the beams used in the COT at the start of the COT; or independent LBT sensing may be performed for each of the beams used in the COT at the start of the COT by adding requirements of category 2 LBT. Note that the category 2 LBT may be an LBT without a random backoff.

Note that applying a beam in LBT may mean applying a reception beam or applying reception beamforming. LBT applying a reception beam or reception beamforming corresponding to a transmission beam or transmission beamforming applied to transmission in COT, may be performed. Transmission may be performed by applying, in the COT, the transmission beam or transmission beamforming corresponding to the successful reception beam or successful reception beamforming in the LBT sensing. Note that the definition of a beam: that is wider than other beams; that covers other beams; or that includes other beams, may be a beam that covers at least spacial directions of the other beams, or may be a beam defined differently.

In addition, when LBT sensing for each beam is performed during MU-MIMO transmission, the following operations 1) to 4) may be performed.

1) In a case where LBT for each beam is performed according to time division multiplexing, after an eCCA for a certain beam is completed, an eCCA for another beam is performed, and transmission is not performed between the eCCAs.
2) In a case where LBT for each beam is performed according to time division multiplexing, after an eCCA for a certain beam is completed, transmission to which the beam is applied is performed in COT. Thereafter, an eCCA for another beam is performed.
3) In a case where LBT for each beam is performed according to time division multiplexing, eCCAs of different beams may be simultaneously performed by using a round-robin method
4) In a case where LBTs for different beams are performed in parallel at the same time, it may be assumed that the node has a capability of sensing different beams at the same time.

Fig. 4 is a drawing illustrating an example of an issue of a hidden terminal. There may be a case in which the channel power detected by a transmission-side node related to directional LBT and the channel power detected by a reception-side node related to directional LBT are different. As shown in Fig. 4, when the gNB directs the directional LBT beam toward the UE1, the hidden terminal issue arises in the UE1 because the UE1 also receives an interference beam from a wireless LAN node that can not be detected by the gNB.

Considering the hidden terminal issue, for example, the reception-side node may perform and report legacy RSSI (Received Signal Strength Indicator) measurements. In addition, the reception-side node may perform an AP-CSI (Aperiodic Channel state information) report. In addition, the reception-side node may perform eCCA and may perform category 2 LBT.

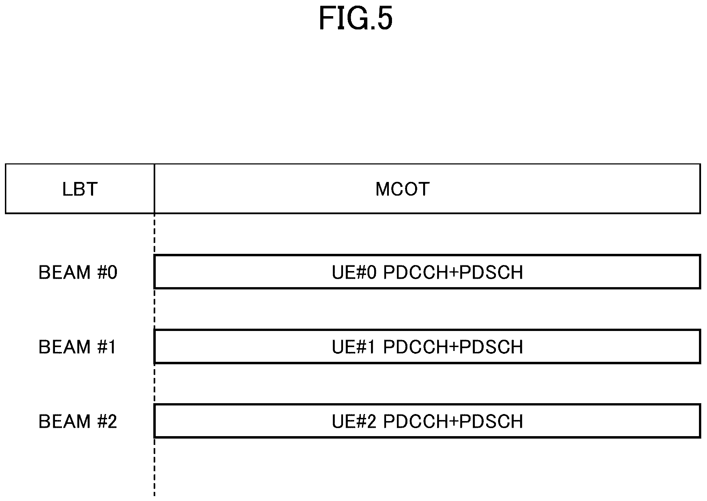

Fig. 5 is a drawing illustrating an example (1) of a multi-beam COT. As shown in Fig. 5, beam # 0, beam # 1 and beam # 2 can be multiplexed by SDM (Spatial division multiplexing) and each beam can be applied to transmit PDCCH and/or PDSCH in the same COT.

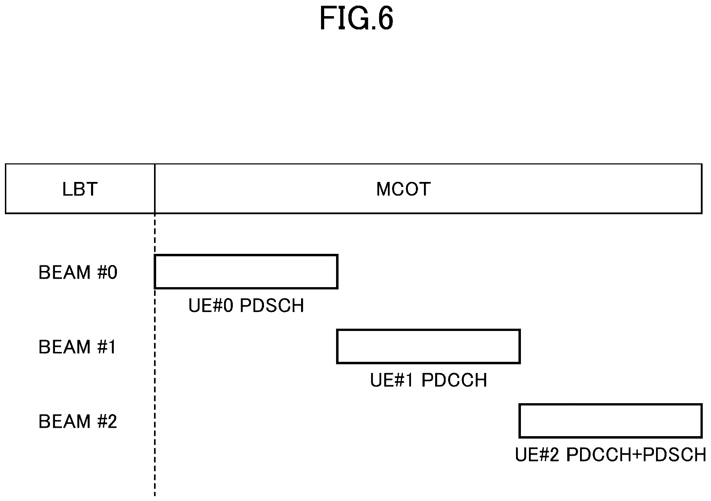

Fig. 6 is a drawing illustrating an example (2) of a multi-beam COT. As shown in Fig. 6, beam # 0, beam # 1 and beam # 2 can be multiplexed by TDM (Time division multiplexing) and each beam can be applied to transmit PDCCH and/or PDSCH in the same COT.

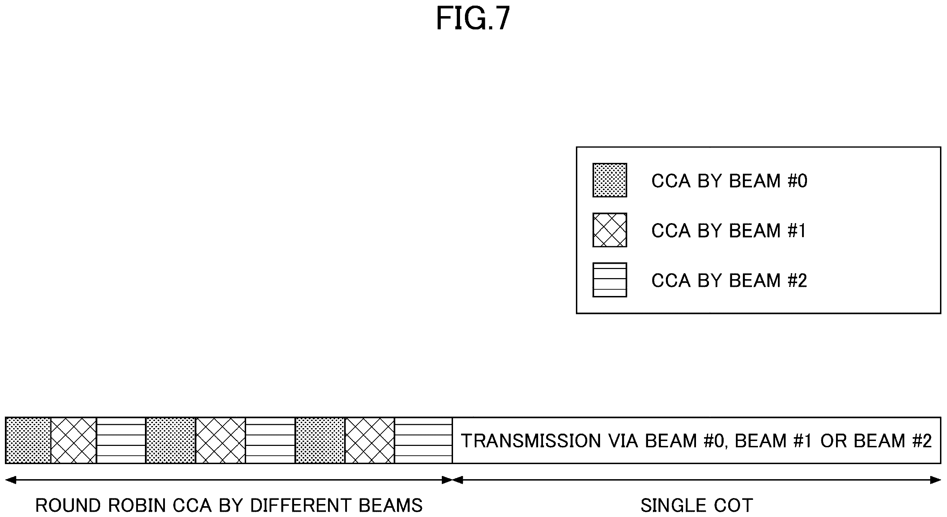

Fig. 7 is a drawing illustrating a round-robin CCA. As shown in Fig. 7, CCA may be performed by using a round-robin method in multiple beams. In the example of FIG. 7, the CCA that uses beam #0, beam #1 and beam #2 is performed by using a round-robin method, and a beam of successful CCA can be applied in a single COT to perform transmission.

Here, in a case where the CCA is performed in which multiple beams are applied by using a round-robin method, it is necessary to determine whether a common single backoff counter is to be used for each beam or a separate backoff counter is to be used for each beam. In addition, before starting COT, it is necessary to determine an operation of the round-robin method in a case where busy is detected in LBT.

Hereinafter, a case where a single backoff counter is used for multiple beams will be described.

The initial value of the single backoff counter may be determined in a single step. For example, the initial value N of the single backoff counter may be determined as a random integer value from 0 to the maximum value N max eff. The maximum value N_max_eff may be determined as shown in 1) - 3) below.
1) In a case where CWp, which is a parameter of the length of the contention window, is applied to individual beams, N_max_eff may be determined by a CWS (Contention Window Size) parameter related to multiple beams. For example, the maximum, minimum or average of the CWp values of respective beams may be configured to N_max_eff. For example, N_max_eff=max {CWp(1), CWp(2), CWp(3),..}.
2) In a case where a common CWp value is configured regardless of the beam, N_max_eff may be determined by the common CWp value.
3) N_max_eff may be defined by the technical specification or may be determined by the RRC configuration.

Further, The initial value of the single backoff counter may be determined in two steps. The initial value N may be determined based on the values of multiple counters generated independently for respective beams. For example, as a first step, as initial values for multiple counters generated independently for respective beams, N1 may be selected from [0, CWp (1)], N2 may be selected from [0, CWp (2)], and N3 may be selected from [0, CWp (3)] or may be determined for each beam. Subsequently, as a second step, the maximum value, the minimum value, or the average value among the initial values of the counters of the respective beams may be configured to N_max_eff. For example, N_max_eff = max (N1, N2, N3,..).

When sensing is performed by using a round-robin method, the backoff counter may be decreased with each round of sensing. The backoff counter value may mean the number of required rounds, and each round may consist of a window of 5 microseconds for each beam.

In addition, when sensing is performed by using a round-robin method, the backoff counter may be decreased with each sensing beam. The backoff counter value may mean the total number of idle 5-microsecond windows for all beams.

When sensing is performed by using a round-robin method, the backoff counter may be started after 8-microsecond windows of all beams. Further, when sensing is performed by using a round-robin method, the backoff counter may be started after the 8-microsecond window of the first beam. Further, when sensing is performed by using a round-robin method, an 8-microsecond window of each beam may be sensed before a 5-microsecond window of the corresponding beam in the first round. In addition, when sensing is performed by using a round-robin method, 8-microsecond windows other than the 8-microsecond window of the first beam need not be sensed.

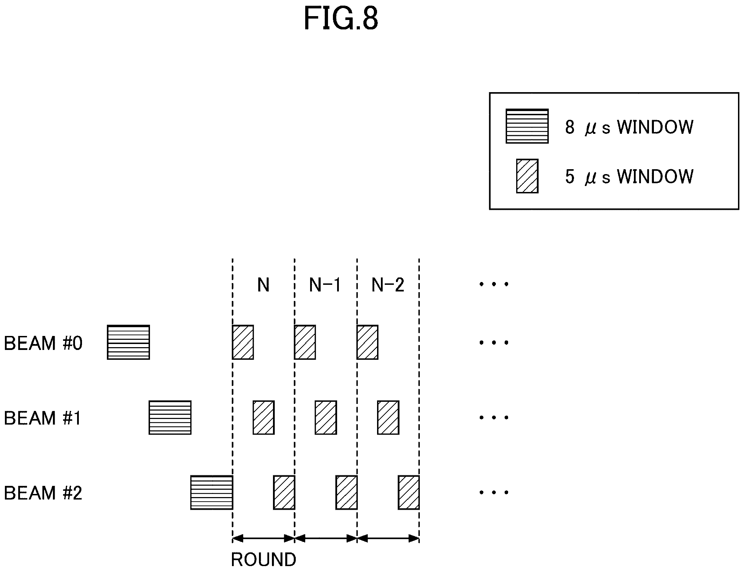

Fig. 8 is a drawing illustrating an example (1) of a round-robin CCA when a single back-off counter according to an embodiment of the present invention is applied. As illustrated in Fig. 8, when sensing is performed by using a round-robin method, the backoff counter may be decreased with each round of sensing. Also, as shown in Fig. 8, when sensing is performed by using a round-robin method, the backoff counter may be started after the 8-microsecond windows of all beams.

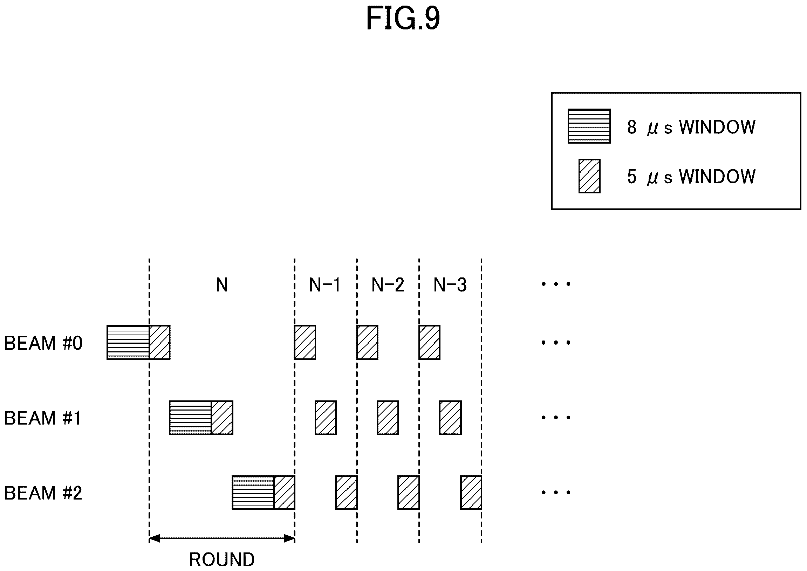

Fig. 9 is a drawing illustrating an example (2) of a round-robin CCA when a single back-off counter according to an embodiment of the present invention is applied. As illustrated in Fig. 9, when sensing is performed by using a round-robin method, the backoff counter may be decreased with each round of sensing. Also, as shown in FIG. 9, when sensing is performed by using a round-robin method, the back-off counter may be started after the 8 microsecond window of the first beam, and the 8 microsecond windows of respective beams may be sensed before the corresponding 5 microsecond windows in the first round.

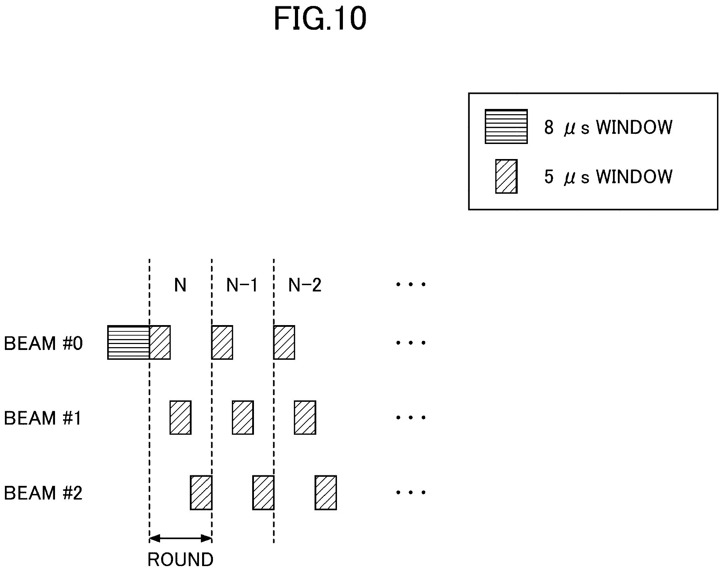

Fig. 10 is a drawing illustrating an example (3) of a round-robin CCA when a single back-off counter according to an embodiment of the present invention is applied. As illustrated in Fig. 10, when sensing is performed by using a round-robin method, the backoff counter may be decreased with each round of sensing. In addition, as shown in Fig. 10, when sensing is performed by using a round-robin method, the backoff counter may be started after the 8 microsecond window of the first beam, and the 8 microsecond windows other than the 8 microsecond window of the first beam need not be sensed.

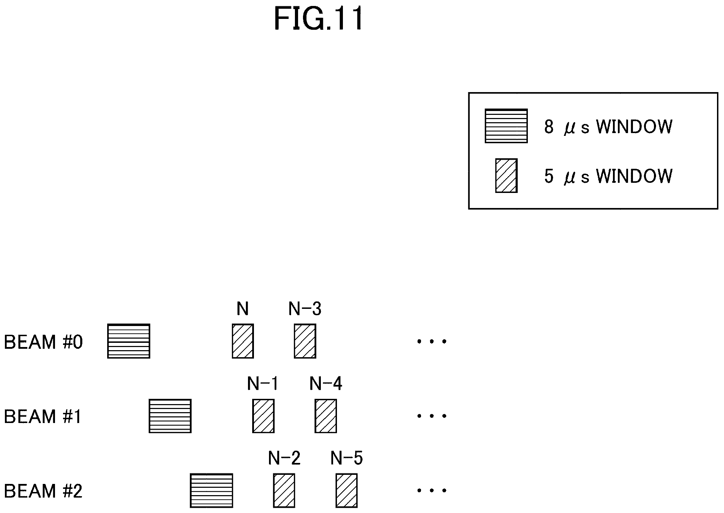

Fig. 11 is a drawing illustrating an example (4) of a round-robin CCA when a single back-off counter according to an embodiment of the present invention is applied. As illustrated in Fig. 11, when sensing is performed by using a round-robin method, the backoff counter may be decreased with each sensing beam. Also, as shown in Fig. 11, when sensing is performed by using a round-robin method, the backoff counter may be started after the 8-microsecond windows of all beams.

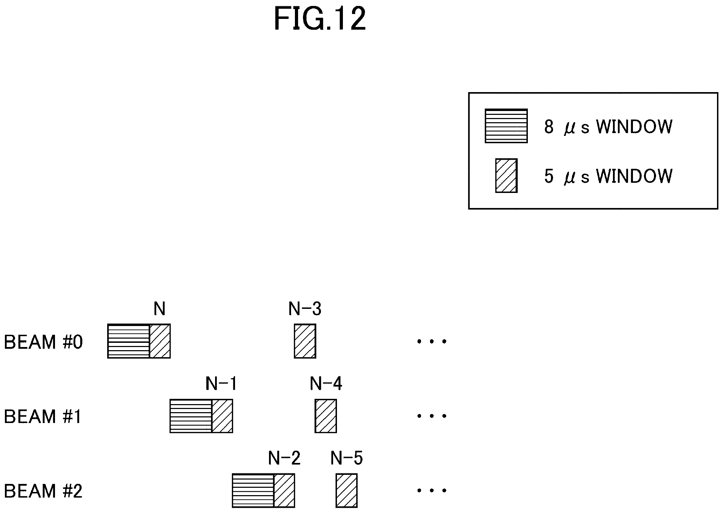

Fig. 12 is a drawing illustrating an example (5) of a round-robin CCA when a single back-off counter according to an embodiment of the present invention is applied. As illustrated in Fig. 12, when sensing is performed by using a round-robin method, the backoff counter may be decreased with each sensing beam. Also, as shown in FIG. 12, when sensing is performed by using a round-robin method, the back-off counter may be started after the 8 microsecond window of the first beam, and the 8 microsecond windows of respective beams may be sensed before the corresponding 5 microsecond windows in the first round.

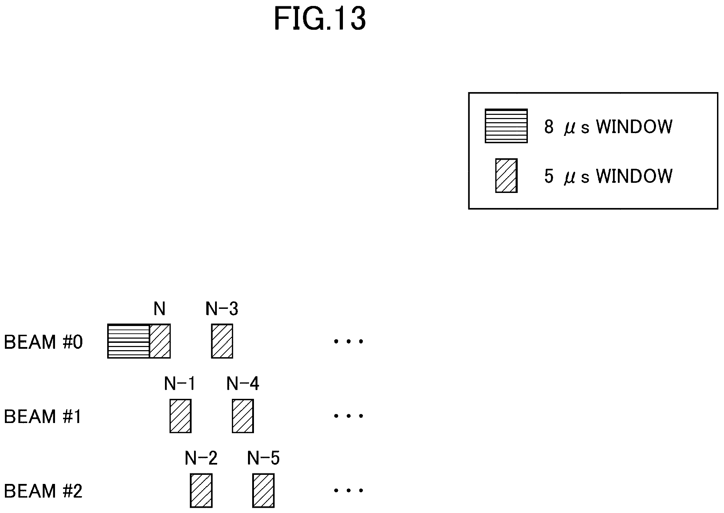

Fig. 13 is a drawing illustrating an example (6) of a round-robin CCA when a single back-off counter according to an embodiment of the present invention is applied. As illustrated in Fig. 13, when sensing is performed by using a round-robin method, the backoff counter may be decreased with each sensing beam. In addition, as shown in Fig. 13, when sensing is performed by using a round-robin method, the backoff counter may be started after the 8 microsecond window of the first beam, and the 8 microsecond windows other than the 8 microsecond window of the first beam need not be sensed.

In a case where a busy state is detected in one of the beams, the following operations 1) to 5) may be performed.
1) Switching to omni LBT or to LBT using a wider sensing beam may be performed. The initial value of the backoff counter in omni-LBT or LBT using a wider sensing beam may be reset and configured to a new value, or may be configured based on the value of the backoff counter at the time of busy detection in sensing using the round-robin method.
2) LBT may be terminated by assuming that LBT has failed,
3) The backoff counter value may be frozen to continue sensing of the beam for which busy is detected. For example, the sensing may be continued until the detected busy state of the beam becomes an idle state, and, after the state of the beam becomes an idle state, may proceed to the sensing of the next beam. In addition, the sensing of the round-robin method may be continued until the busy state of the beam is detected X times. The beam for which busy is detected X times need not be used in COT as a busy beam.
4) Sensing of the beam for which busy is detected may be terminated and the round-robin sensing may be performed for the remaining beams. The beam for which busy is detected need not be used in COT as a busy beam.
5) The backoff counter value may be frozen, and the round-robin sensing may be continued until all beams become idle. For example, the idle state may be detected by sensing windows of 5 microseconds, or the idle state may be detected by sensing windows of 8 microseconds and windows of 5 microseconds.

Further, additional sensing may be performed before starting COT. For example, a one-shot LBT may be performed again for each successfully sensed beam before starting COT. For example, a one-shot omni LBT or an LBT with a wider beam covering at least each successfully sensed beam, may be performed before starting COT.

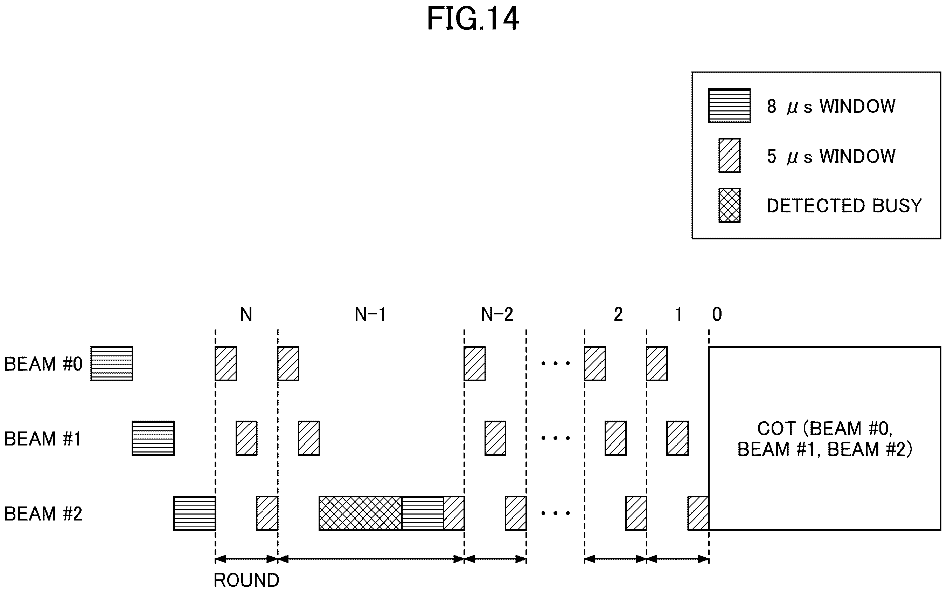

Fig. 14 is a drawing illustrating an example (7) of a round-robin CCA when a single back-off counter according to an embodiment of the present invention is applied. Fig. 14 shows an example in which, when sensing is performed by using a round-robin method, the backoff counter is decreased with each sensing round and the backoff counter is started after the 8 microsecond windows of all beams.

As shown in Fig. 14, the backoff counter value may be frozen to continue sensing of the beam for which busy is detected. Further, as illustrated in Fig. 14, the sensing may be continued until the detected busy state of the beam becomes an idle state, and, after the state of the beam becomes an idle state, may proceed to the sensing of the next beam. In the example of Fig. 14, the LBTs of all beams are successful, and beam # 0, beam # 1 and beam # 2 can be used in COT.

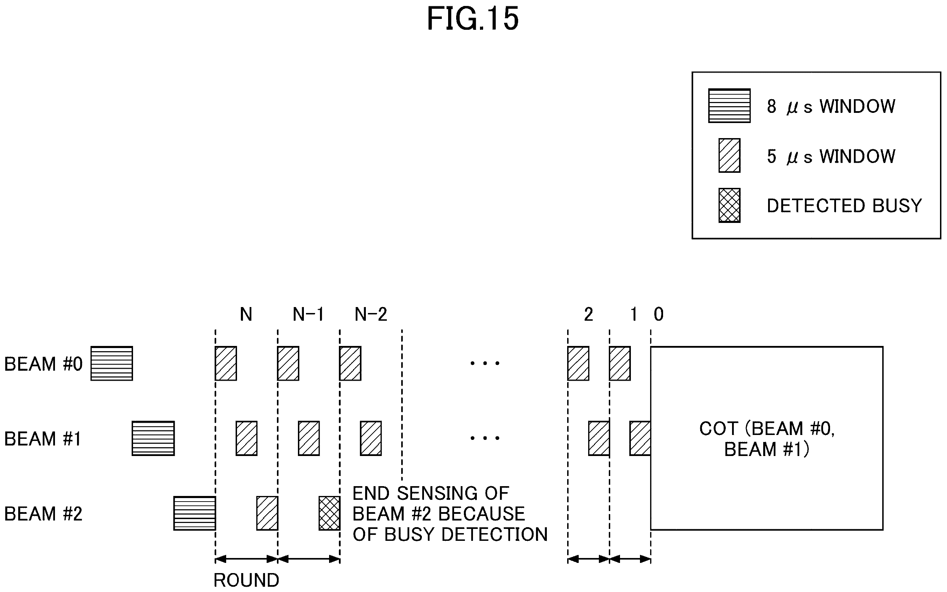

Fig. 15 is a drawing illustrating an example (8) of a round-robin CCA when a single back-off counter according to an embodiment of the present invention is applied. Fig. 15 shows an example in which, when sensing is performed by using a round-robin method, the backoff counter is decreased with each sensing round and the backoff counter is started after the 8 microsecond windows of all beams.

As illustrated in Fig. 15, sensing of the beam for which busy is detected may be terminated and the round-robin sensing may be performed for the remaining beams. The beam for which busy is detected need not be used in COT as a busy beam. In the example of Fig. 15, the LBTs other than the LBT of beam #2 are successful, and beam #0 and beam #1 can be used in COT.

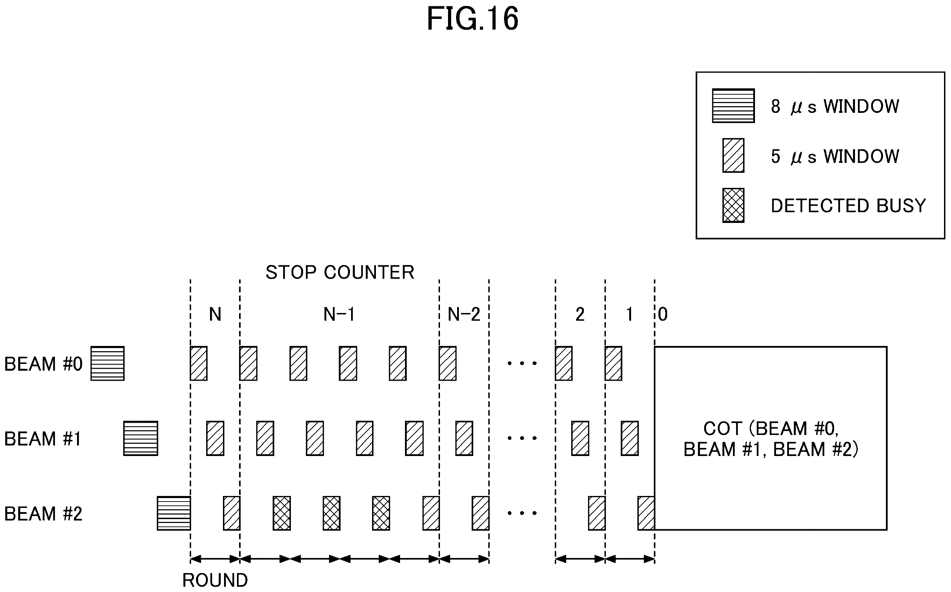

Fig. 16 is a drawing illustrating an example (9) of a round-robin CCA when a single back-off counter according to an embodiment of the present invention is applied. Fig. 16 is an example in which, when sensing is performed by using a round-robin method, the backoff counter is decreased with each round and the backoff counter is started after the 8 microsecond windows of all beams.

As illustrated in Fig. 16, the backoff counter value may be frozen, and the round-robin sensing may be continued until all beams' state becomes an idle state. In the example of Fig. 16, the LBTs of all beams are successful, and beam # 0, beam # 1 and beam # 2 can be used in COT.

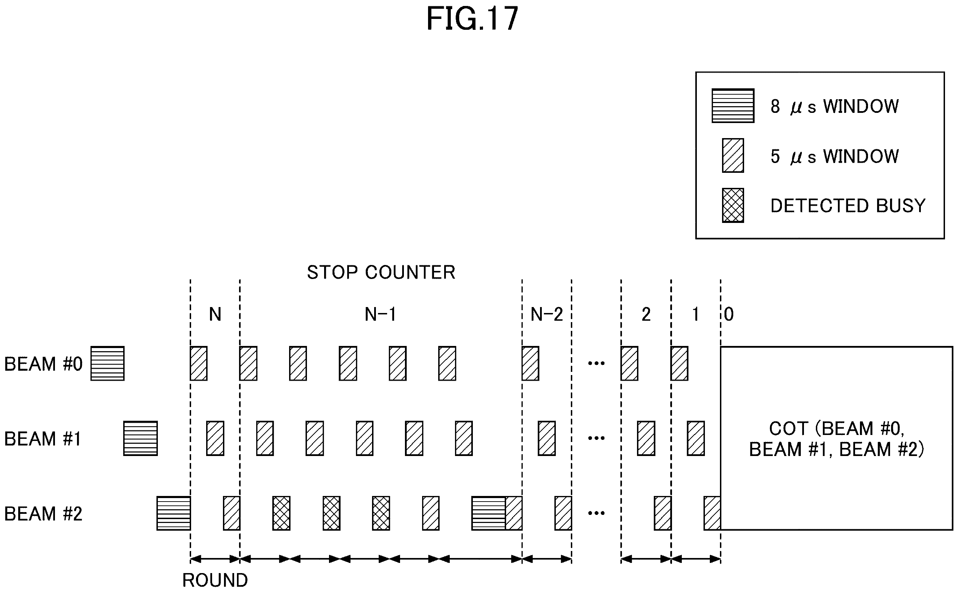

Fig. 17 is a drawing illustrating an example (10) of a round-robin CCA when a single back-off counter according to an embodiment of the present invention is applied. Fig. 17 is an example in which, when sensing is performed by using a round-robin method, the backoff counter is decreased with each round and the backoff counter is started after the 8 microsecond windows of all beams.

As shown in Fig. 17, the backoff counter value may be frozen and sensing with 5 microsecond windows by using a round-robin method may be continued until all beams' state becomes an idle state, and the idle state may be detected with an 8 microsecond window and a 5 microsecond window. In the example of Fig. 17, the LBTs of all beams are successful, and beam # 0, beam # 1 and beam # 2 can be used in COT.

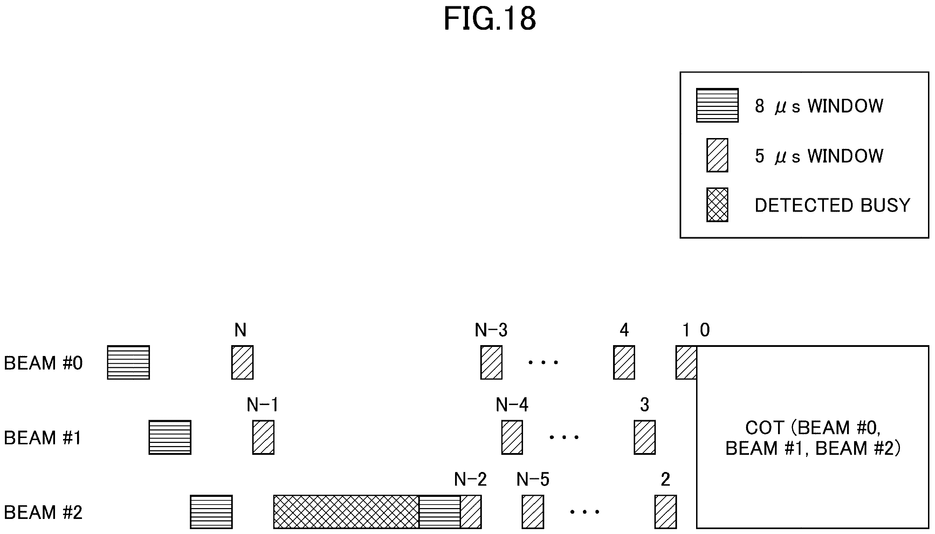

Fig. 18 is a drawing illustrating an example (11) of a round-robin CCA when a single back-off counter according to an embodiment of the present invention is applied. Fig. 18 shows an example in which, when sensing is performed by using a round-robin method, the backoff counter is decreased with each sensing beam and the backoff counter is started after the 8 microsecond windows of all beams.

As shown in Fig. 18, the backoff counter value may be frozen to continue sensing of the beam for which busy is detected. Further, as illustrated in Fig. 18, the sensing may be continued until the detected busy state of the beam becomes an idle state, and, after the state of the beam becomes an idle state, may proceed to the sensing of the next beam. The idle state may be detected by sensing windows of 8 microseconds and windows of 5 microseconds. In the example of Fig. 18, the LBTs of all beams are successful, and beam # 0, beam # 1 and beam # 2 can be used in COT.

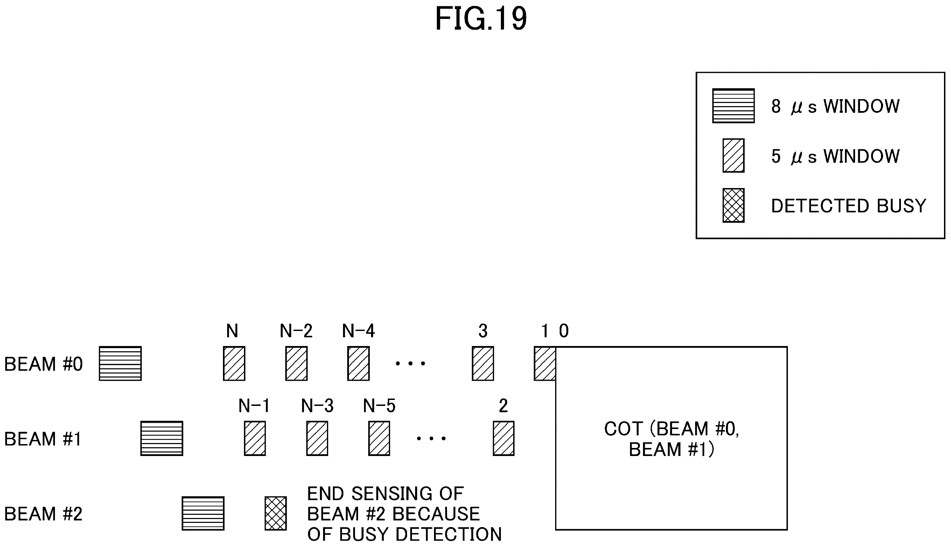

Fig. 19 is a drawing illustrating an example (12) of a round-robin CCA when a single back-off counter according to an embodiment of the present invention is applied. Fig. 19 shows an example in which, when sensing is performed by using a round-robin method, the backoff counter is decreased with each sensing beam and the backoff counter is started after the 8 microsecond windows of all beams.

As illustrated in Fig. 19, the sensing of the beam for which busy is detected may be terminated and the round-robin sensing may be performed for the remaining beams. The beam for which busy is detected need not be used in COT as a busy beam. In the example of Fig. 19, the LBTs other than the LBT of beam #2 are successful, and beam #0 and beam #1 can be used in COT.

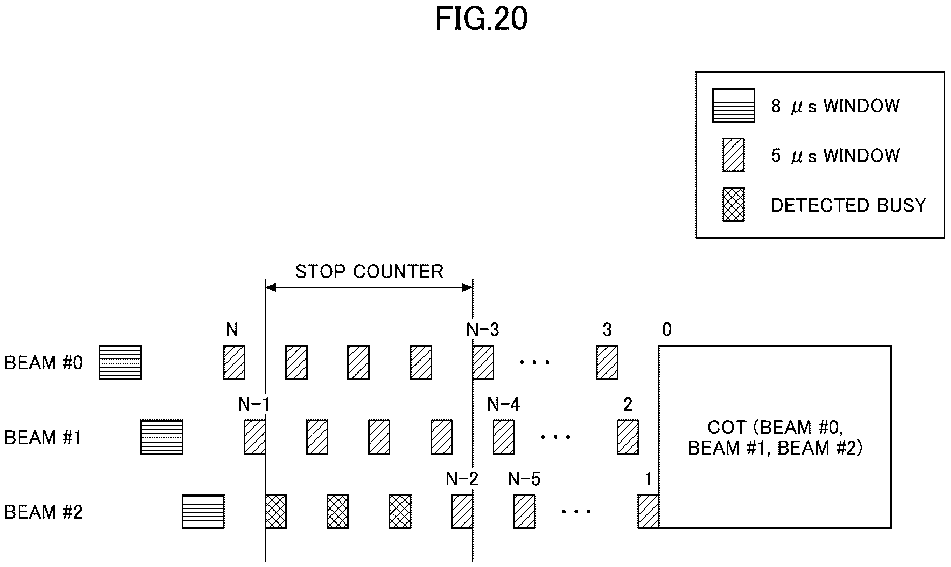

Fig. 20 is a drawing illustrating an example (13) of a round-robin CCA when a single back-off counter according to an embodiment of the present invention is applied. Fig. 20 shows an example in which, when sensing is performed by using a round-robin method, the backoff counter is decreased with each sensing beam and the backoff counter is started after the 8 microsecond windows of all beams.

As illustrated in Fig. 20, the backoff counter value may be frozen, and the round-robin sensing may be continued until all beams' state becomes an idle state. In the example of Fig. 20, the LBTs of all beams are successful, and beam # 0, beam # 1 and beam # 2 can be used in COT.

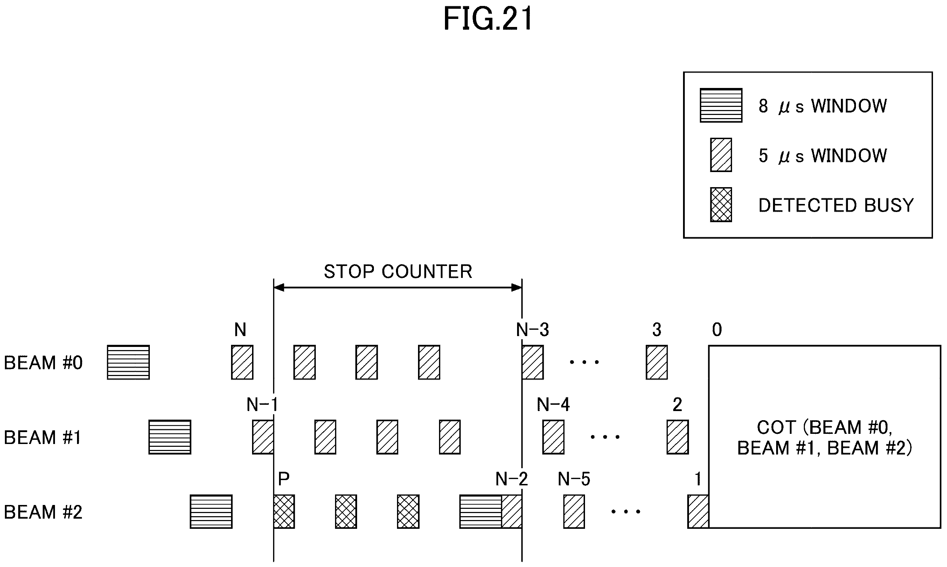

Fig. 21 is a drawing illustrating an example (14) of a round-robin CCA when a single back-off counter according to an embodiment of the present invention is applied. Fig. 21 shows an example in which, when sensing is performed by using a round-robin method, the backoff counter is decreased with each sensing beam and the backoff counter is started after the 8 microsecond windows of all beams.

As shown in Fig. 21, the backoff counter value may be frozen and sensing with 5 microsecond windows by using a round-robin method may be continued until all beams' state becomes an idle state, and the idle state may be detected with an 8 microsecond window and a 5 microsecond window. In the example of Fig. 21, the LBTs of all beams are successful, and beam # 0, beam # 1 and beam # 2 can be used in COT.

Hereinafter, a case in which an individual backoff counter is used for each beam will be described.

When performing CCA that applies multiple beams by using a round-robin method, in a case where an individual backoff counter is used for each beam, the initial value of each backoff counter may be independently determined. For example, as initial values of multiple backoff counters independently generated for corresponding beams, N1 may be selected from [0, CWp (1)], N2 may be selected from [0, CWp (2)], or N3 may be selected from [0, CWp (3)].

Further, a common value may be used as the initial value of each backoff counter. The common initial value for each backoff counter may be determined in a single step. For example, the initial value N of the common backoff counter may be determined as a random integer value from 0 to the maximum value N_max_eff. The maximum value N_max_eff may be determined as shown in 1) - 3) below.
1) In a case where CWp, which is a parameter of the length of the contention window, is applied to individual beams, N_max_eff may be determined by a CWS parameter related to multiple beams. For example, the maximum, minimum or average of the CWp values of respective beams may be configured to N_max_eff. For example, N_max_eff=max {CWp(1), CWp(2), CWp(3),..}.
2) In a case where a common CWp value is configured regardless of the beam, N_max_eff may be determined by the common CWp value.
3) N_max_eff may be defined by the technical specification or may be determined by the RRC configuration.

Further, The initial value of the backoff counter may be determined in two steps. The initial value N may be determined based on the values of multiple counters generated independently for respective beams. For example, as a first step, as initial values for multiple counters generated independently for respective beams, N1 may be selected from [0, CWp (1)], N2 may be selected from [0, CWp (2)], and N3 may be selected from [0, CWp (3)] or may be determined for each beam. Subsequently, as a second step, the maximum value, the minimum value, or the average value among the initial values of the counters of the respective beams may be configured to N_max_eff. For example, N_max_eff = max (N1, N2, N3,..).

When performing CCA that applies multiple beams by using a round-robin method, in a case where a separate backoff counter is used for each beam, the backoff counter may be decreased when the corresponding sensing beam is idle in the sensing window, and the backoff counter may be frozen when the corresponding sensing beam is busy in the sensing window.

Also, when performing CCA that applies multiple beams by using a round-robin method, in a case where a separate backoff counter is used for each beam, the backoff counter may be started after the 8-microsecond windows of all beams. Further, when sensing is performed by using a round-robin method, the backoff counter may be started after the 8-microsecond window of the first beam. Further, when sensing is performed by using a round-robin method, an 8-microsecond window of each beam may be sensed before a 5-microsecond window of the corresponding beam in the first round. In addition, when sensing is performed by using a round-robin method, 8-microsecond windows other than the 8-microsecond window of the first beam need not be sensed.

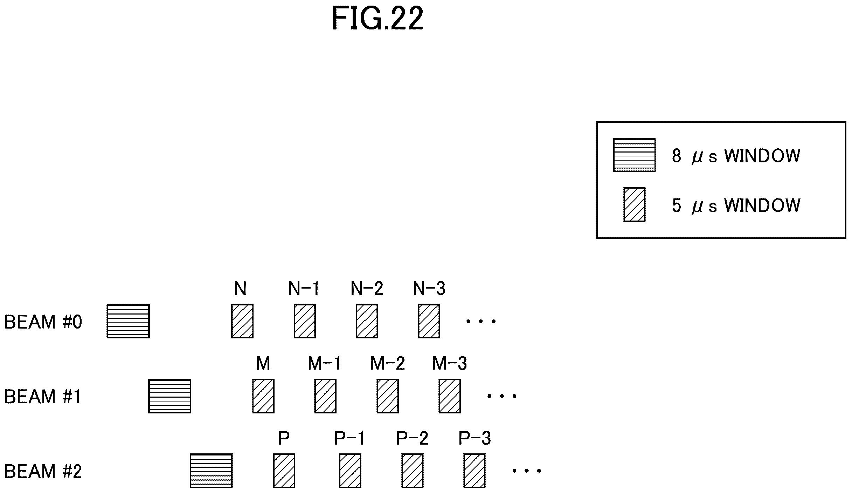

Fig. 22 is a drawing illustrating an example (1) of a round-robin CCA when individual back-off counters according to an embodiment of the present invention are applied. Fig. 22 shows an example in which the initial value of the backoff counter for beam # 0 is N, the initial value of the backoff counter for beam # 1 is M, and the initial value of the backoff counter for beam # 2 is P. As illustrated in Fig. 22 that illustrates an example of starting the backoff counters after the 8 microsecond windows for all beams, the backoff counters are started after the 8 microsecond windows for all beams when performing CCA applying multiple beams by using a round-robin method in a case where a separate backoff counter is used for each beam.

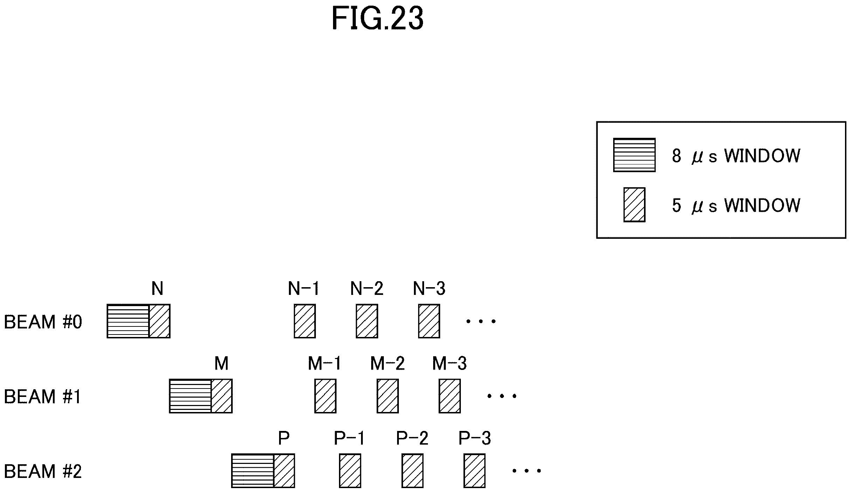

Fig. 23 is a drawing illustrating an example (2) of a round-robin CCA when individual back-off counters according to an embodiment of the present invention are applied. Fig. 23 is an example in which the initial value of the backoff counter for beam # 0 is N, the initial value of the backoff counter for beam # 1 is M, and the initial value of the backoff counter for beam # 2 is P, and is an example in which the backoff counters are started after the 8 microsecond windows for all beams. As illustrated in Fig. 23, when performing CCA that applies multiple beams by using a round-robin method, in a case where an individual backoff counter is used for each beam, the back-off counter may be started after the 8 microsecond window of the first beam, and the 8 microsecond windows of respective beams may be sensed before the 5 microsecond windows of the corresponding beams in the first round.

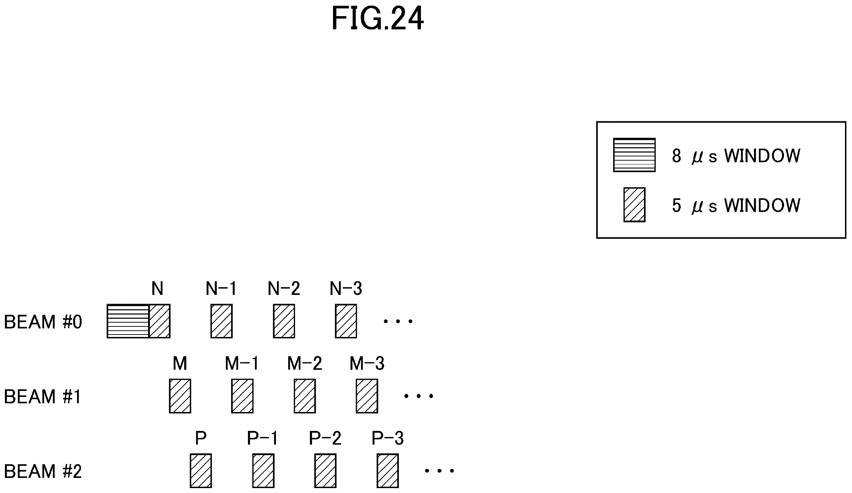

Fig. 24 is a drawing illustrating an example (3) of a round-robin CCA when individual back-off counters according to an embodiment of the present invention are applied. Fig. 24 is an example in which the initial value of the backoff counter for beam # 0 is N, the initial value of the backoff counter for beam # 1 is M, the initial value of the backoff counter for beam # 2 is P, and the backoff counters are started after the 8 microsecond windows for all beams. As shown in Fig. 24, when performing CCA applying multiple beams by using a round-robin method, in a case where an individual backoff counter is used for each beam, 8-microsecond windows other than the 8-microsecond window of the first beam need not be sensed.

In a case where a busy state is detected in one of the beams, the following operations 1) to 5) may be performed.
1) Switching to omni LBT or to LBT using a wider sensing beam may be performed. The initial value of the backoff counter in omni-LBT or LBT using a wider sensing beam may be reset and configured to a new value, or may be configured based on the value of the backoff counter at the time of busy detection in sensing using the round-robin method.
2) LBT may be terminated by assuming that LBT has failed,
3) The backoff counter value may be frozen to continue sensing of the beam for which busy is detected. For example, the sensing may be continued until the detected busy state of the beam becomes an idle state, and, after the state of the beam becomes an idle state, may proceed to the sensing of the next beam. In addition, the sensing of the round-robin method may be continued until the busy state of the beam is detected X times. The beam for which busy is detected X times need not be used in COT as a busy beam.
4) Sensing of the beam for which busy is detected may be terminated and the round-robin sensing may be performed for the remaining beams. The beam for which busy is detected need not be used in COT as a busy beam.
5) The backoff counter value may be frozen, and the round-robin sensing may be continued until all beams become idle. For example, the idle state may be detected by sensing windows of 5 microseconds, or the idle state may be detected by sensing windows of 8 microseconds and windows of 5 microseconds.

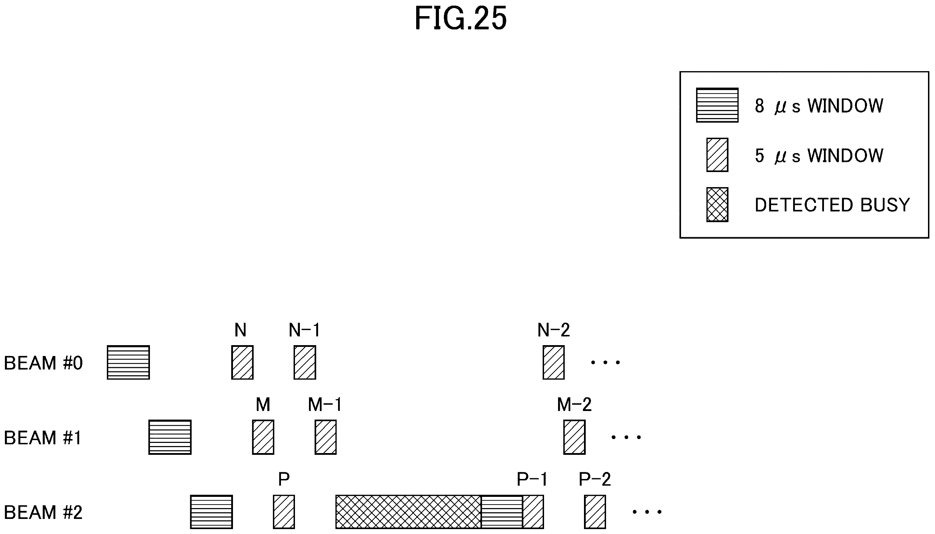

Fig. 25 is a drawing illustrating an example (4) of a round-robin CCA when individual back-off counters according to an embodiment of the present invention are applied. Fig. 25 is an example in which the initial value of the backoff counter for beam # 0 is N, the initial value of the backoff counter for beam # 1 is M, the initial value of the backoff counter for beam # 2 is P, and the backoff counters are started after the 8 microsecond windows for all beams.

As shown in Fig. 25, the backoff counter value may be frozen to continue sensing of the beam for which busy is detected. Further, as illustrated in Fig. 25, the sensing may be continued until the detected busy state of the beam becomes an idle state, and, after the state of the beam becomes an idle state, may proceed to the sensing of the next beam. The idle state may be detected by sensing windows of 8 microseconds and windows of 5 microseconds.

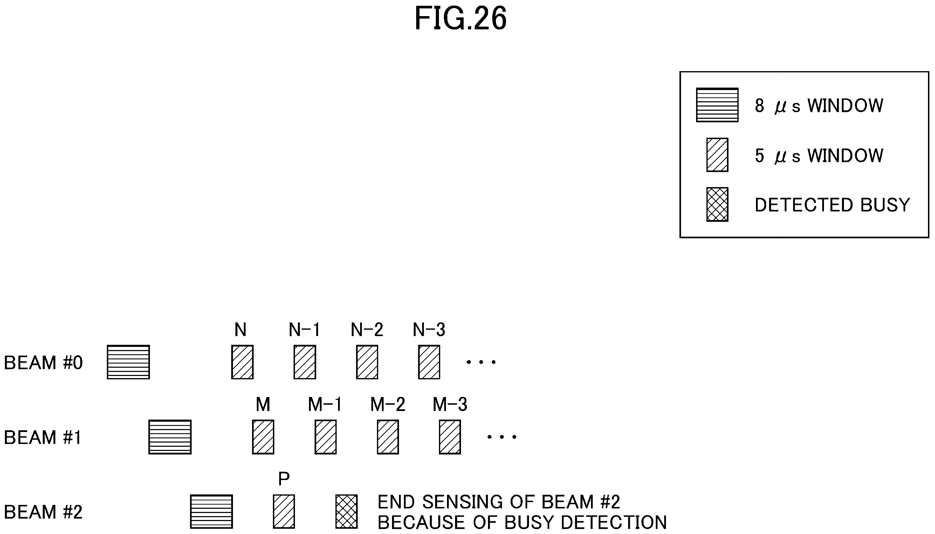

Fig. 26 is a drawing illustrating an example (5) of a round-robin CCA when individual back-off counters according to an embodiment of the present invention are applied. Fig. 26 is an example in which the initial value of the backoff counter for beam # 0 is N, the initial value of the backoff counter for beam # 1 is M, the initial value of the backoff counter for beam # 2 is P, and the backoff counters are started after the 8 microsecond windows for all beams.

As illustrated in Fig. 26, the sensing of the beam for which busy is detected may be terminated and the round-robin sensing may be performed for the remaining beams. The beam for which busy is detected need not be used in COT as a busy beam.

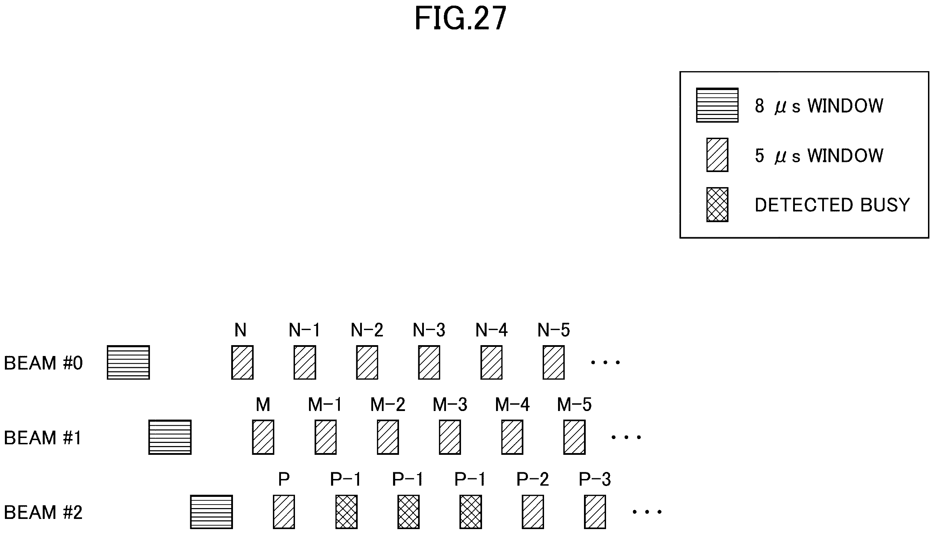

Fig. 27 is a drawing illustrating an example (6) of a round-robin CCA when individual back-off counters according to an embodiment of the present invention are applied. Fig. 27 is an example in which the initial value of the backoff counter for beam # 0 is N, the initial value of the backoff counter for beam # 1 is M, the initial value of the backoff counter for beam # 2 is P, and the backoff counters are started after the 8 microsecond windows for all beams.

As illustrated in Fig. 27, the backoff counter value may be frozen, and the round-robin sensing may be continued until all beams' state becomes an idle state.

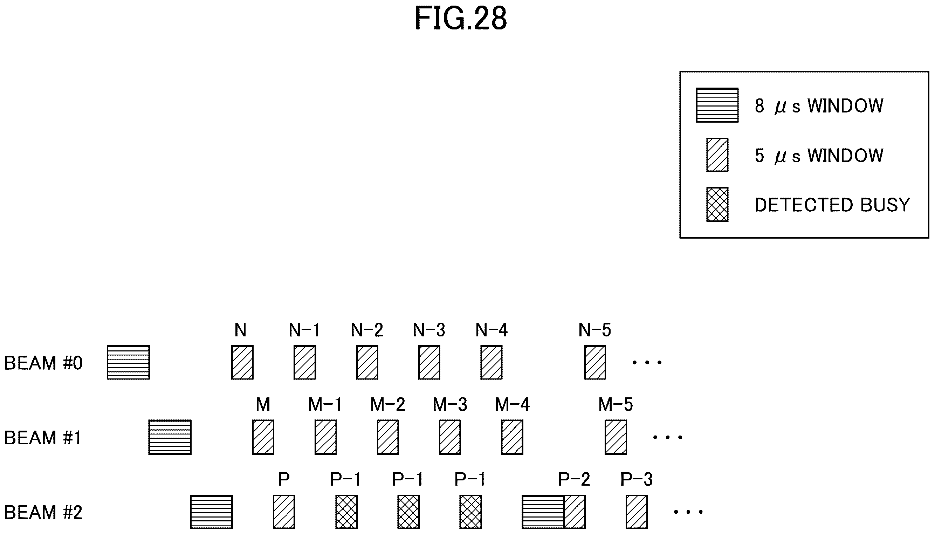

Fig. 28 is a drawing illustrating an example (7) of a round-robin CCA when individual back-off counters according to an embodiment of the present invention are applied. Fig. 28 is an example in which the initial value of the backoff counter for beam # 0 is N, the initial value of the backoff counter for beam # 1 is M, the initial value of the backoff counter for beam # 2 is P, and the backoff counters are started after the 8 microsecond windows for all beams.

As shown in Fig. 28, the backoff counter value may be frozen and sensing with 5 microsecond windows by using a round-robin method may be continued until all beams' state becomes an idle state, and the idle state may be detected with an 8 microsecond window and a 5 microsecond window.

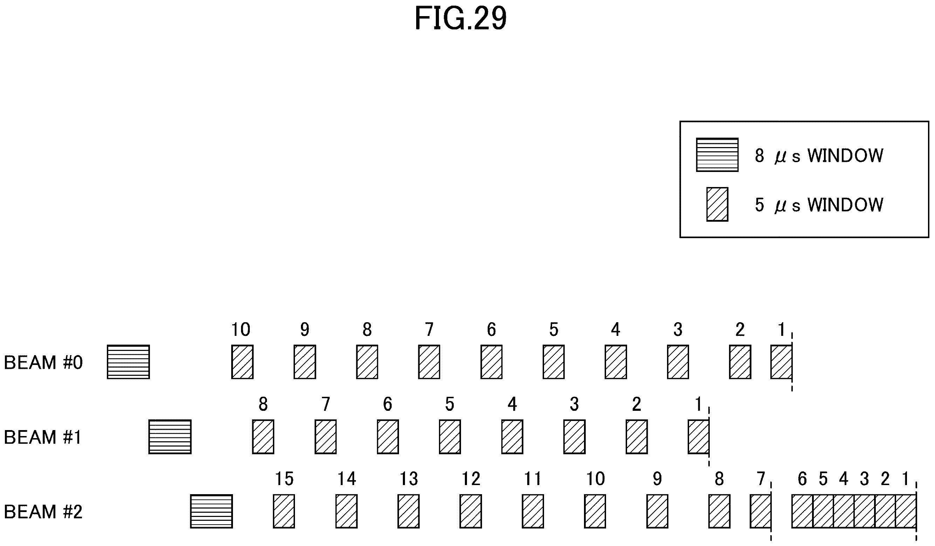

Fig. 29 is a drawing illustrating an example (8) of a round-robin CCA when individual back-off counters according to an embodiment of the present invention are applied. As shown in Fig. 29, in a case where the initial value of the backoff counter varies from beam to beam and/or in a case where the duration of being busy varies from beam to beam, it is expected that there will be a large gap among sensing completions in respective beams. Therefore, operations of 1)-4) as shown below may be performed.
1) Additional sensing may be performed before starting COT. For example, a one-shot LBT may be performed again for each successfully sensed beam before starting COT.
2) A one-shot omni LBT or an LBT with a wider beam covering at least each successfully sensed beam, may be performed before starting COT.
3) In a case where each backoff counter is initialized independently, a limit may be configured to the difference between the initial values of respective backoff counters. For example, the limit may be applied to the difference between the smallest initial value and the largest initial value, or the initial values with a difference greater than the limit difference may be prohibited and may be changed to a value in a range between the configured upper limit and lower limit.
4) A timer may be introduced to limit the gap between the completion points of sensing for respective beams. For example, the timer may be called a round-robin completion gap timer. The timer may be started when sensing of a beam is first completed. When the timer expires, even if there is still a beam being sensed, the LBT for the beam may be interrupted.

Note that the operation related to the LBT described above may be performed by the base station 10 or by the terminal 20. Note that the operation related to the LBT described above may be applicable to a specific frequency band. For example, the operation related to the LBT described above may be applicable to FR 2-2 of 52.6 - 71 GHz.

Note that the LBT, eCCA or sensing in an embodiment of the present invention may involve a random backoff, a one-time one-shot backoff, or may perform sensing in a certain sensing slot.

The beam order in the round-robin method in an embodiment of the present invention may be determined accordingly.

Note that which operation of the above described embodiments can be performed may be configured by an upper layer parameter, may be reported by the terminal 20 as the UE capability, may be defined by technical specifications, or may be determined by a combination of the upper-layer parameter configuration and the UE capability.

Note that the UE capability may be defined to indicate whether the terminal 20 supports LBT in which sensing for respective beams is performed by using a round-robin method according to time division multiplexing for obtaining COT to which multiple beams are applied.

Note that the UE capability may be defined to indicate whether the terminal 20 supports LBT in which sensing for respective beams is performed by using a round-robin method according to time division multiplexing for obtaining COT to which multiple beams are applied, and in which a single backoff counter is applied.

Note that the UE capability may be defined to indicate whether the terminal 20 supports LBT in which sensing for respective beams is performed by using a round-robin method according to time division multiplexing for obtaining COT to which multiple beams are applied, and in which an individual backoff counter for each beam is applied.

Note that the UE capability may be defined to indicate whether the terminal 20 supports LBT in which sensing for respective beams is performed by using a round-robin method of continuously sensing busy-state beams, according to time division multiplexing for obtaining COT to which multiple beams are applied.

Note that the UE capability may be defined to indicate whether the terminal 20 supports a one-shot LBT for each beam after the completion of an LBT in which sensing for respective beams is performed by using a round-robin method according to time division multiplexing for obtaining COT to which multiple beams are applied.

Note that the UE capability may be defined to indicate whether the terminal 20 supports an omni LBT after the completion of an LBT in which sensing for respective beams is performed by using a round-robin method according to time division multiplexing for obtaining COT to which multiple beams are applied. Note that the UE capability may be defined to indicate whether the terminal 20 supports a one-shot omni LBT after the completion of an LBT in which sensing for respective beams is performed by using a round-robin method according to time division multiplexing for obtaining COT to which multiple beams are applied.

According to an embodiment of the present invention, the base station 10 or terminal 20 is enabled to perform directional LBT in which sensing for respective beams is performed according to time division multiplexing by using an appropriate round-robin method.

In other words, it is possible to perform directional LBT (Directional Listen before talk), in which a plurality of beams are applied, in a radio communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

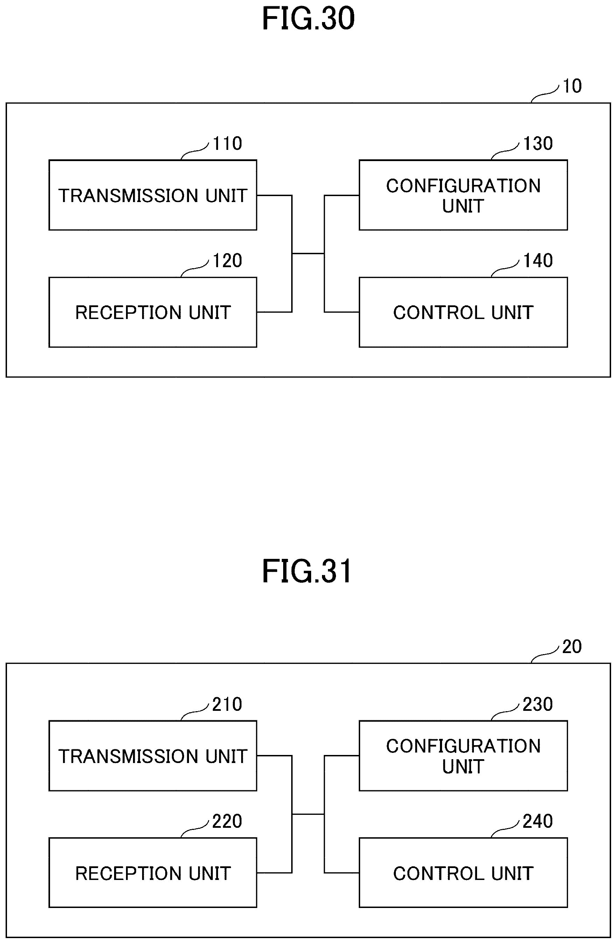

Fig. 30 is a drawing illustrating an example of a functional structure of a base station 10 according to an embodiment of the present invention. As shown in Fig. 30, the base station 10 includes a transmission unit 110, a reception unit 120, a configuration unit 130, and a control unit 140. The functional structure illustrated in Fig. 30 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the DSS configuration.

The control unit 140 performs control related to the DSS configuration as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 31 is a drawing illustrating an example of a functional structure of a terminal 20 according to an embodiment of the present invention. As shown in FIG. 31, the terminal 20 includes a transmission unit 210, a reception unit 220, a configuration unit 230, and a control unit 240. The functional structure illustrated in Fig. 31 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 stores pre-configured configuration information. Contents of the configuration information are, for example, information related to the DSS configuration.

The control unit 240 performs control related to the DSS configuration as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 30 and Fig. 31), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

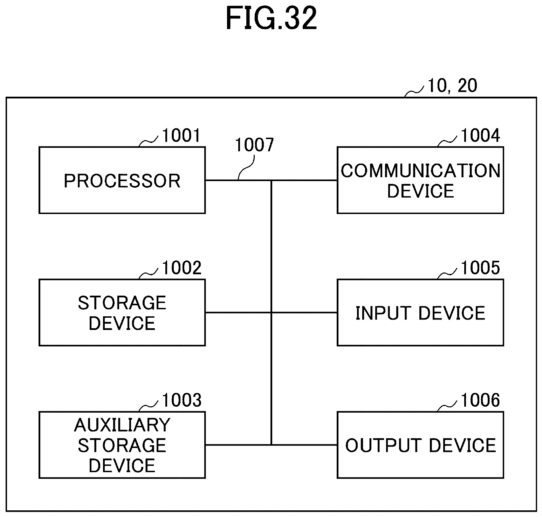

For example, the base station 10, terminal 20, etc., according to an embodiment of the present disclosure may function as a computer for processing the radio communication method of the present disclosure. Fig. 32 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 30 may be realized by control programs that are stored in the storage device 1002 and are executed by the processor 1001. Further, for example, the control unit 240 of the terminal 20 illustrated in Fig. 31 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a micro processor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

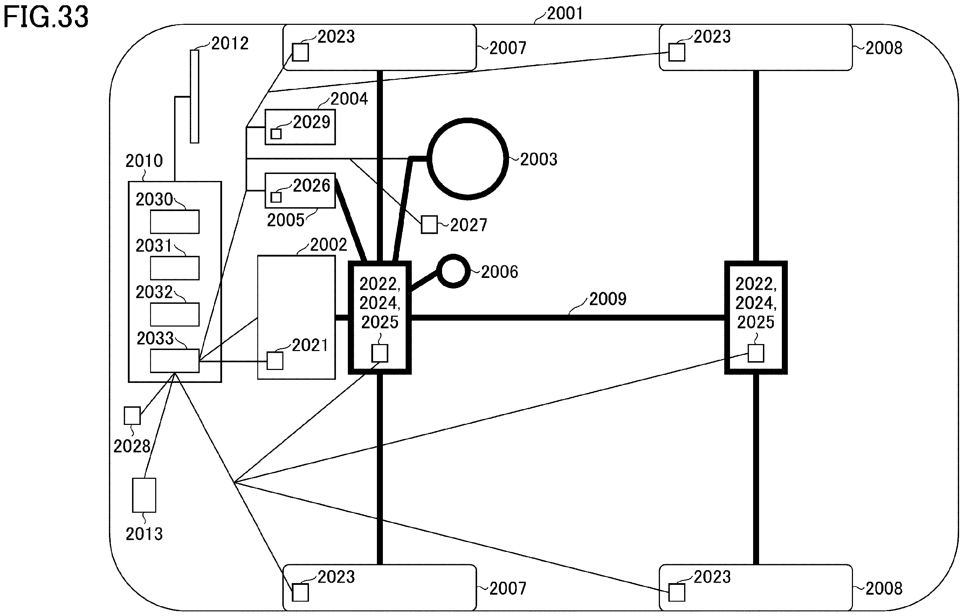

Fig. 33 shows an example of a configuration of a vehicle 2001. As shown in Fig. 33, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel (also called a handle) and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal depression signal acquired by an accelerator pedal sensor 2029, a brake pedal depression signal acquired by a brake pedal sensor 2026, an operation signal of a shift lever acquired by a shift lever sensor 2027, and a detection signal for detecting an obstacle, a vehicle, a pedestrian, and the like, acquired by an object detection sensor 2028.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver' s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the accelerator pedal depression signal acquired by the accelerator pedal sensor 2029, the brake pedal depression signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Embodiment summary)

According to the disclosed technique, a base station is provided. The base station includes a reception unit configured to perform time division multiplexing of a plurality of reception beams corresponding to a plurality of transmission beams to be applied to transmission in COT (Channel Occupancy Time), and to perform LBT (Listen before talk) in which sensing is performed by applying each of the plurality of reception beams using a round-robin method; and a transmission unit configured to apply, to the transmission in the COT, a transmission beam corresponding to a reception beam, among the plurality of the reception beams, for which a busy state is not detected in the LBT.

According to the above configuration, the base station 10 or the terminal 20 is enabled to perform directional LBT in which sensing for respective beams is performed according to time division multiplexing by using an appropriate round-robin method. In other words, it is possible to perform directional LBT (Directional Listen before talk), in which a plurality of beams are applied, in a radio communication system.

The reception unit may apply a single back-off counter for the plurality of reception beams, and the single back-off counter may be decreased with each round or each beam. According to the above configuration, the base station 10 or the terminal 20 is enabled to perform directional LBT in which sensing for respective beams is performed according to time division multiplexing by using an appropriate round-robin method.

In a case where a reception beam among the plurality of the reception beams is detected to be busy, the reception unit may continue the sensing by freezing the single back-off counter until the reception beam in the busy state becomes an idle state. According to the above configuration, the base station 10 or the terminal 20 is enabled to perform directional LBT in which sensing for respective beams is performed according to time division multiplexing by using an appropriate round-robin method.

In a case where a reception beam among the plurality of the reception beams is detected to be busy, the reception unit may terminate the sensing of the reception beam in the busy state, and may perform the sensing of the plurality of the reception beams other than the reception beam in the busy state, using the round robin method. According to the above configuration, the base station 10 or the terminal 20 is enabled to perform directional LBT in which sensing for respective beams is performed according to time division multiplexing by using an appropriate round-robin method.

The reception unit may apply corresponding back-off counters to the plurality of the reception beams, and a back-off counter for each of the beams may be decreased with each round or each beam. According to the above configuration, the base station 10 or the terminal 20 is enabled to perform directional LBT in which sensing for respective beams is performed according to time division multiplexing by using an appropriate round-robin method.

According to the disclosed technique, a communication method performed by a base station is provided. The communication method includes performing time division multiplexing of a plurality of reception beams corresponding to a plurality of transmission beams applied for transmission in COT (Channel Occupancy Time); performing LBT (Listen before talk) in which sensing is performed by applying each of the plurality of reception beams using a round-robin method; and applying, to the transmission in the COT, a transmission beam corresponding to a reception beam, among the plurality of the reception beams, for which a busy state is not detected in the

### LBT.

According to the above configuration, the base station 10 or the terminal 20 is enabled to perform directional LBT in which sensing for respective beams is performed according to time division multiplexing by using an appropriate round-robin method. In other words, it is possible to perform directional LBT (Directional Listen before talk), in which a plurality of beams are applied, in a radio communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present application is based on and claims priority to Japanese patent application No. 2021-132480 filed on August 16, 2021, the entire contents of which are hereby incorporated herein by reference.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A base station comprising:
a reception unit configured to perform time division multiplexing of a plurality of reception beams corresponding to a plurality of transmission beams to be applied to transmission in COT (Channel Occupancy Time), and to perform LBT (Listen before talk) in which sensing is performed by applying each of the plurality of reception beams using a round-robin method; and
a transmission unit configured to apply, to the transmission in the COT, a transmission beam corresponding to a reception beam, among the plurality of the reception beams, for which a busy state is not detected in the LBT.

2. The base station as claimed in claim 1, wherein the reception unit applies a single back-off counter for the plurality of reception beams, and the single back-off counter is decreased with each round or each beam.

3. The base station as claimed in claim 2, wherein, in a case where a reception beam among the plurality of the reception beams is detected to be busy, the reception unit continues the sensing by freezing the single back-off counter until the busy state of the reception beam becomes an idle state.

4. The base station as claimed in claim 2, wherein, in a case where a reception beam among the plurality of the reception beams is detected to be busy, the reception unit terminates the sensing of the reception beam in the busy state, and performs the sensing of the plurality of the reception beams other than the reception beam in the busy state, using the round-robin method.

5. The base station as claimed in claim 1, wherein the reception unit applies corresponding back-off counters to the plurality of the reception beams, and a back-off counter for each of the beams is decreased with each round or each beam.

6. A communication method executed by a base station, the communication method comprising:
performing time division multiplexing of a plurality of reception beams corresponding to a plurality of transmission beams to be applied to transmission in COT (Channel Occupancy Time);
performing LBT (Listen before talk) in which sensing is performed by applying each of the plurality of reception beams using a round-robin method; and
applying, to the transmission in the COT, a transmission beam corresponding to a reception beam, among the plurality of the reception beams, for which a busy state is not detected in the LBT.
